# EUROPÄISCHE PATENTSCHRIFT

(11) **EP 0 886 483 B1**
(45) Veröffentlichungstag und Bekanntmachung des Hinweises auf die Patenterteilung: **03.05.2000**
(21) Anmeldenummer: 97914068.8
(22) Anmeldetag: 19.01.1997
(51) Int. Cl.: A47G 23/06

(54) **TABLETT, INSBESONDERE SERVIERTABLETT**
TRAY, ESPECIALLY SERVING TRAY
PLATEAU, NOTAMMENT PLATEAU DE SERVICE

(30) Priorität: 25.01.1996 DE 29601203 U
(43) Veröffentlichungstag der Anmeldung: 30.12.1998
(73) Patentinhaber: RABE, Jürgen, 91315 Höchstadt (DE)
(72) Erfinder: RABE, Jürgen, 91315 Höchstadt (DE)
(74) Vertreter: Hufnagel, Walter, Dipl.-Ing., Dipl.-Wirtsch.-Ing.
(86) Internationale Anmeldenummer: DE9700083
(87) Internationale Veröffentlichungsnummer: WO9726814

(56) Entgegenhaltungen:
- EP-A- 0 637 494
- DE-A- 2 447 366
- DE-A- 2 804 143
- DE-A- 3 608 805
- DE-A- 3 738 212
- DE-A- 4 417 871
- DE-U- 7 806 610
- US-A- 4 137 356

## Beschreibung

Die vorliegende Erfindung bezieht sich auf ein Tablett, insbesondere auf ein Serviertablett.

Es ist bereits aus der DE-A-36 08 805 bekannt, die Oberfläche eines Tabletts mit einer rutschhemmenden Folie zu versehen.

Aus der DE-A-37 38 212 ist es weiterhin bekannt, auf der Oberfläche eines Serviertabletts zwischen dem Tablettkörper und der Antirutschfolie eine Dekorfolie und gegebenenfalls unter dieser noch eine Abdeckfolie vorzusehen.

Weiterhin ist es aus der DE-A-28 04 143 bekannt, ein Serviertablett aus mit wärmehärtbaren Harzen überzogenen oder imprägnierten, gestapelten Papierbögen durch Formgebung und gleichzeitiger Polymerisation durch Wärmezufuhr herzustellen. Bei diesem Prozeß werden die Harze dabei in synthetisches Gummimaterial umgewandelt.

Schließlich wird in der US-A 4 137 356 eine Matte oder Unterlage aus Papier oder aus Plastikmaterial als flexibles oder deformierbares Basisteil beschrieben, die auf der Ober- und Unterseite mit einer Vielzahl von einzelnen Erhöhungen aus einem Antirutschmaterial versehen sind. Hierdurch wird erreicht, daß ein Rutschen der Unterlage auf ihrem Untergrund sowie von auf der Unterlage abgestellten Objekten vermieden wird.

Mit der vorliegenden Erfindung soll die Aufgabe gelöst werden, das Verrutschen von servierten Gegenständen sicher zu vermeiden.

Gelöst wird diese Aufgabe durch die im Anspruch 1 angegebenen Merkmale.

Ein erfindungsgemäß ausgestaltetes Tablett, insbesondere Serviertablett, zeichnet sich dadurch aus, daß eine sichere Haftung des Tabletts auch auf Unterlagen erreicht wird, ohne daß besondere Halterungen, wie beispielsweise die Unterlage wenigstens zum Teil umgreifende Halteabschnitte für den Tablettrand, vorgesehen werden müssen. Das erfindungsgemäße Tablett, insbesondere Serviertablett, ist daher bevorzugt zur Anwendung in Flugzeugen, Bussen, Schiffen, Wohnmobilen, beim Camping oder dgl. geeignet.

Weitere vorteilhafte Ausgestaltungen der Erfindung sind in den Unteransprüchen angegeben und werden nachfolgend anhand der in der Zeichnung veranschaulichten Ausführungsbeispiele näher beschrieben.

Es zeigen:
- Fig. 1: einen Querschnitt durch ein Tablett gemäß der vorliegenden Erfindung;
- Fig. 2 bis 5: Abschnitte eines Querschnitts eines Tabletts in verschiedenen Ausführungsarten und
- Fig. 6: einen Ausschnitt einer Spritzgießform zur Herstellung eines erfindungsgemäßen Tabletts.

Mit 1 ist ein Tablett bezeichnet, dessen Tablettkörper 2 auf der Unterseite 3 mit einer Antirutschschicht 4 versehen ist. Diese Antirutschschicht 4 kann aufgespritzt oder aufgestrichen oder als Blatt oder Folie aufgeklebt oder bei einem Preß-, Spritzpreß- oder Spritzgießvorgang zur Herstellung des Tablettkörpers aus Kunststoff, insbesondere über Haftvermittler unter Druck und bei der Plastifiziertemperatur an den Tablettkörper 2 gebunden sein.

Die Antirutschschicht 4 besteht vorzugsweise aus einem Kautschuk, beispielsweise aus einem Silikonkautschuk, aus thermoplastischen Elastomeren oder aus weich eingestellten thermoplastischen Kunststoffen, beispielsweise aus oder auf der Basis von Polyurethan (PU), Polyvinylchlorid (PVC), Polyethylen (PE), Polypropylen (PP) oder Acrylbutadienstyrol (ABS).

Ein derartig gestaltetes Tablett 1 kann auch auf sehr glatten Flächen abgestellt werden, ohne daß die Gefahr besteht, daß es verrutscht oder gar weggleitet.

Zusätzlich ist auch in an sich bekannter Weise die Oberfläche 5 des Tablettkörpers 2 mit einer Antirutschschicht 6 versehen. Hierdurch wird auch verhindert, daß auf dem Tablett 1 abgestellte Gegenstände auf diesem verrutschen können.

Die Antirutschschicht 4 ist bzw. die Antirutschschichten 4, 6 sind auf einer bzw. auf je einer Trägerfolie 7 vorgesehen und die Trägerfolie(n) 7 ist bzw. sind auf den Tablettkörper 2 aufgeklebt oder durch einen Druck- und Temperaturprozeß befestigt, beispielsweise beim Hinterspritzen zur Herstellung des Tablettkörpers 2 angeformt.

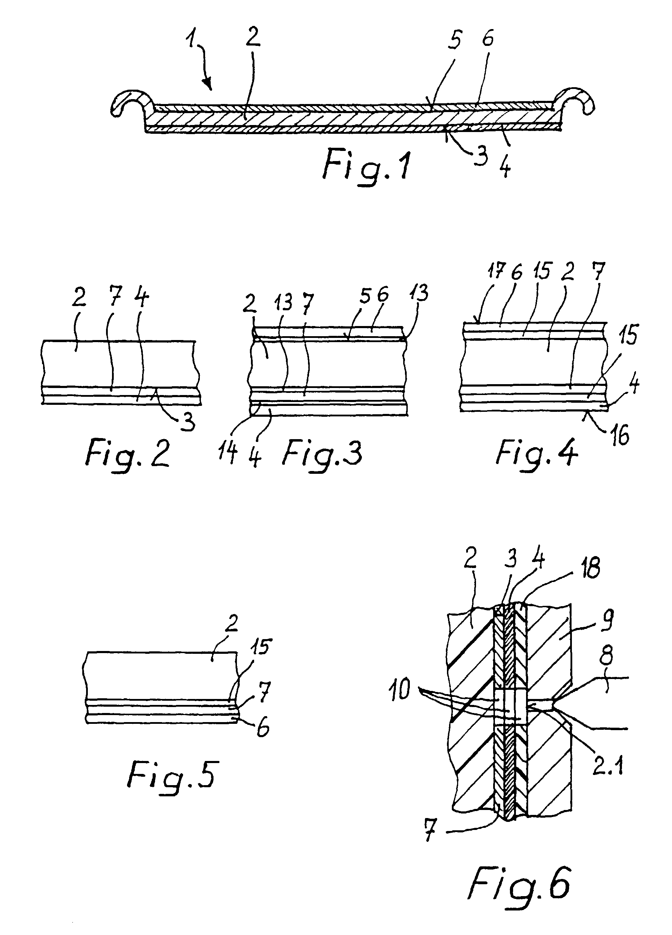

Beim Verbinden der Trägerfolie 7 mit der Unterseite 3 des Tablettkörpers 2 während des Preß-, Spritzpreß- bzw. Spritzgießvorganges ist gemäß Fig.6 die Trägerfolie 7 und die auf dieser befindliche Antirutschschicht 4 im Bereich der Spritzdüse 8 eines Formteils 9 einer Spritzgießform oder Spritzpreßform mit je einer Aussparung 10 versehen, so daß die Trägerfolie 7 hinterspritzt werden kann. Die Angußstelle 2.1 befindet sich somit auf der Unterseite 2 des Tabletts 1 bzw. des Tablettkörpers 2. Es können auch mehrere Angußstellen 2.1 vorgesehen sein.

Die Antirutschschicht 4 und/oder 6 kann in Form einer für sich allein handhabbaren Antirutschfolie verwendet werden oder eine handhabbare oder insbesondere nicht handhabbare Antirutschschicht ist auf einer Trägerfolie 7 aufgebracht und kann so in die Spritzgießform eingelegt und dann der Preß-, Spritzpreß- oder Spritzgießvorgang durchgeführt werden.

Zusätzlich können Dekors oder Dekorationselemente 15 in den nachfolgend angegebenen Arten mit eingelegt, eingefügt oder auf andere Weise dort eingebracht werden. Wie in der Fig. 6 weiter veranschaulicht, kann die handhabbare Antirutschschicht 4 bzw. die mit der Trägerfolie 7 versehene Antirutschschicht 4, auf einer Transportfolie 18 vorgesehen sein, mit der sie in das Formwerkzeug eingelegt wird. Nach dem Formvorgang wird dann die Transportfolie 18 abgezogen.

Es kann vorteilhaft sein, zwischen der Trägerfolie 7 und dem Tablettkörper 2 eine Haftvermittlerschicht 13 vorzusehen, wie in Fig. 3 dargestellt. Auch kann in vorteilhafter Weise gemäß Fig.3 zwischen der Trägerfolie 7 und der Antirutschschicht 4 eine Haftvermittlerschicht 14 vorgesehen sein. Dasselbe kann auf der Oberseite 5 vorgenommen werden.

Gemäß einer vorteilhaften Weiterbildung der Erfindung kann die Antirutschschicht 4 der Unterseite 3 und gegebenenfalls die Antirutschschicht 6 der Oberseite 5 durchscheinend (opak) oder durchsichtig ausgebildet sein. Hierdurch kann die Farbe des Tablettkörpers 2 oder ein auf ihm angebrachtes Dekor- oder Dekorationselement 15 und/oder ein Logo oder die Farbe der Trägerfolie 7 oder ein auf dieser angebrachtes Dekor- oder Dekorationselement 15 und/oder Logo erkannt werden. Beispielsweise kann die Trägerfolie 7 selbst ganz oder zum Teil das Dekor-oder Dekorationselement 15 bilden, indem es beispielsweise ganz oder teilweise ein- oder mehrfarbig ausgebildet und/oder eingefärbt und/oder beschriftet und/oder mit gegenständlichen Formen oder dgl. versehen ist. Das Dekor- oder Dekorationselement 15 kann auch eine zusätzliche Folie oder ein oder mehrere einzelne oder zusammenhängende Folienabschnitte sein, die auf dem Tablettkörper 2 bzw. auf der Trägerfolie 7 vorgesehen sein können.

Weiterhin kann zusätzlich zu den durchscheinenden oder durchsichtigen Antirutschschichten 4 bzw. 6 eine durchscheinende oder durchsichtige Trägerfolie 7 verwendet werden. Das Dekor- oder Dekorationselement 15 kann dabei zwischen dieser und dem Tablettkörper 2 vorgesehen sein, wie in Fig. 4 dargestellt. Trotzdem kann bzw. können auch ein oder mehrere Dekor(s) oder Dekorationselement(e) 15 zwischen der Trägerfolie 7 und der Antirutschschicht 4 bzw. 6 vorgesehen sein, wie ebenfalls in Fig. 4 gezeigt.

Gegebenenfalls kann es auch zweckmäßig sein, die Oberfläche 16 der Antirutschschicht 4 und/oder die Oberfläche 17 der Antirutschschicht 6 gerauht oder profiliert, beispielsweise feinprofiliert oder feingenoppt, auszuführen. Hierdurch kann z.B. die Bildung von Luft- oder Flüssigkeitseinschlüssen zwischen der Antirutschschicht 4 bzw. 6 und einer Auflage bzw. einem aufgesetzten Gegenstand vermieden werden. Ansonsten würde die Haftung durch die Einschlüsse gemindert oder verhindert.

Die mit einer Trägerfolie 7 versehene(n) Antirutschschicht(en) 4 bzw. 4, 6 können als zusammenhängende Fläche oder als einzelne Flächenelemente oder Einzelformen, beispielsweise in Form von Punkten und/oder Ringen und/oder Scheiben und/oder Streifen und/oder drei- oder mehreckigen Flächen, in Sternform, oder dgl. ausgebildet sein und selbst ein oder mehrere Dekorationselement(e) oder Dekor(s) 15 bilden.

Die Antirutschfolie 4 bzw. die Antirutschfolien 4, 6, mit der Trägerfolie 7, und eventuell mit den Dekorationselementen 15, kann bzw. können in Form von Abschnitten in die Spritzgießform 9 eingelegt und dann der Preß-, Spritzprozeß- oder Spritzgießvorgang durchgeführt werden.

Die Trägerfolie 7 und die Haftvermittlerschicht 13 bestehen bevorzugt aus einem oder auf der Basis wenigstens eines der Materialien Acrylbutadienstyrol (ABS), Polystyrol (PS), Polypropylen (PP) oder Polyethylen (PE).

Die Haftvermittlerschicht 14 besteht vorteilhaft aus einem oder auf der Basis wenigstens eines der Materialien vernetzendes Polyurethan (PUR) und/oder Acrylat (AC).

## Patentansprüche

1. Tablett (1), insbesondere Serviertablett, wobei die Oberseite (5) des Tablettkörpers (2) eine diese ganz oder teilweise bedeckende Antirutschschicht (6) aufweist,
dadurch gekennzeichnet,
daß auch die Unterseite (3) des Tablettkörpers (2) eine diese ganz oder teilweise bedeckende Antirutschschicht (4) aufweist, und
daß zwischen den Antirutschschichten (4, 6) und dem Tablettkörper (2) eine Trägerfolie (7) vorgesehen ist,
die auf die Unterseite (3) und gegebenenfalls auch auf die Oberseite (5) des Tablettkörpers (2) aufgebracht, insbesondere aufgeklebt, ist oder
an die der Tablettkörper (2) in einem Preß-, Spritzpreß- oder Spritzgießvorgang angeformt ist.

2. Tablett nach Anspruch 1, dadurch gekennzeichnet, daß die auf der Unterseite (3) vorgesehene Trägerfolie (7) und die auf dieser aufgebrachte Antirutschschicht (4) im Bereich der Angußstelle(n) (2.1) je eine Aussparung (10) aufweist bzw. aufweisen und daß der Tablettkörper (2) so angeformt ist, daß sich die Angußstelle(n)(2.1) auf der Unterseite (3) des Tablettkörpers (2) befindet bzw. befinden.

3. Tablett nach Anspruch 1 oder 2, dadurch gekennzeichnet, daß zwischen den Antirutschschichten (4, 6) und dem Tablettkörper (2) Haftvermittlerschichten (13, 14) vorgesehen sind.

4. Tablett nach einem der Ansprüche 1 bis 3, dadurch gekennzeichnet, daß zwischen der Trägerfolie (7) und dem Tablettkörper (2) eine Haftvermittlerschicht (13) vorgesehen ist.

5. Tablett nach einem der Ansprüche 1 bis 4, dadurch gekennzeichnet, daß zwischen der Trägerfolie (7) und den Antirutschschichten (4, 6) eine Haftvermittlerschicht (14) vorgesehen ist.

6. Tablett nach einem der Ansprüche 1 bis 5, dadurch gekennzeichnet, daß die Antirutschschichten (4, 6) aus oder auf der Basis von Kautschuken, thermoplastischen Elastomeren oder weich eingestellten, thermoplastischen Kunststoffen bestehen.

7. Tablett nach einem der Ansprüche 1 bis 6, dadurch gekennzeichnet, daß die Trägerfolie (7) aus einem oder auf der Basis wenigstens eines der Materialien Acrylbutadienstyrol (ABS), Polystyrol (PS), Polypropylen (PP) oder Polyethylen (PE) besteht.

8. Tablett nach einem der Ansprüche 1 bis 7, dadurch gekennzeichnet, daß die Haftvermittlerschicht (14) zwischen den Antirutschschichten (4, 6) und der Trägerfolie (7) aus einem oder auf der Basis wenigstens eines der Materialien vernetzendes Polyurethan (PUR) und/oder Acrylat (AC) besteht.

9. Tablett nach einem der Ansprüche 1 bis 8, dadurch gekennzeichnet, daß die Haftvermittlerschicht (13) zwischen der Trägerfolie (7) und dem Tablettkörper (2) aus einem oder auf der Basis wenigstens eines der Materialien Acrylbutadienstyrol (ABS), Polystyrol (PS), Polypropylen (PP) oder Polyethylen (PE) besteht.

10. Tablett nach einem der Ansprüche 1 bis 9, dadurch gekennzeichnet, daß die Antirutschschichten (4, 6) der Unterseite (3) und/oder der Oberseite (5) durchsichtig oder durchscheinend ausgebildet sind und unter diesen Antirutschschichten (4, 6) wenigstens ein Dekorationselement oder Dekor (15) vorgesehen ist.

11. Tablett nach Anspruch 10, dadurch gekennzeichnet, daß die Trägerfolie (7) selbst ganz oder zum Teil das Dekorationselement oder Dekor (15) bildet.

12. Tablett nach Anspruch 10 oder 11, dadurch gekennzeichnet, daß auf der Trägerfolie (7) wenigstens ein Dekorationselement oder Dekor (15) vorgesehen ist.

13. Tablett nach einem der Ansprüche 10 bis 12, dadurch gekennzeichnet, daß die Trägerfolie (7) durchsichtig oder durchscheinend ausgebildet ist und zwischen dieser Trägerfolie (7) und dem Tablettkörper (2) wenigstens ein Dekorationselement oder Dekor (15) vorgesehen ist.

14. Tablett nach Anspruch 13, dadurch gekennzeichnet, daß das wenigstens eine Dekorationselement oder Dekor (15) auf der Trägerfolie (7) vorgesehen ist.

15. Tablett nach einem der Ansprüche 1 bis 14, dadurch gekennzeichnet, daß die Oberfläche(n) (16, 17) der Antirutschschicht(en) (4 bzw. 6) gerauht oder profiliert ist bzw. sind.

16. Tablett nach einem der Ansprüche 1 bis 15, dadurch gekennzeichnet, daß die Antirutschschicht (4) der Unterseite (3) und gegebenenfalls die Antirutschschicht (6) der Oberseite (5) in Form von einzelnen und/oder zusammenhängenden Punkten und/oder Ringen und/oder Scheiben und/oder Streifen und/oder drei- oder mehreckigen Flächen ausgebildet ist bzw. sind.

## Claims

1. Tray (1), in particular serving tray, whereby the top (5) of the tray body (2) exhibits a non-slip coating (6) covering this wholly or partly, characterised in that the underside (3) of the tray body (2) also exhibits a non-slip coating (4) covering this wholly or partly, and in that between the non-slip coatings (4, 6) and the tray body (2) there is a carrier film (7) which is applied, in particular glued, to the underside (3) and possibly also to the top (5) of the tray body (2), or to which the tray body (2) is moulded in a compression moulding, injection pressing or injection moulding operation.

2. Tray according to claim 1, characterised in that the carrier film (7) provided on the underside (3) and the non-slip coating (4) applied on the latter each exhibit an opening (10) in the area of the gate mark(s) (2.1) and in that the tray body (2) is moulded so that the gate mark(s) (2.1) is/are located on the underside (3) of the tray body (2).

3. Tray according to claim 1 or 2, characterised in that adhesion-promoting layers (13, 14) are provided between the non-slip coatings (4, 6) and the tray body (2).

4. Tray according to one of claims 1 to 3, characterised in that an adhesion promoting layer (13) is provided between the carrier film (7) and the tray body (2).

5. Tray according to one of claims 1 to 4, characterised in that an adhesion promoting layer (14) is provided between the carrier film (7) and the non-slip coatings (4, 6).

6. Tray according to one of claims 1 to 5, characterised in that the non-slip coatings (4, 6) are made of or based on rubbers, thermoplastic elastomers or soft thermoplastic plastics.

7. Tray according to one of claims 1 to 6, characterised in that the carrier film (7) is made of or based on at least one of the materials acrylic butadiene styrene (ABS), polystyrene (PS), polypropylene (PP) or polyethylene (PE).

8. Tray according to one of claims 1 to 7, characterised in that the adhesion promotion layer (14) between the non-slip coatings (4, 6) and the carrier film (7) is made of or based on at least one of the materials cross-linking polyurethane (PUR) and/or acrylate (AC).

9. Tray according to one of claims 1 to 8, characterised in that the adhesion promoting layer (13) between the carrier film (7) and the tray body (2) is made of or based on at least one of the materials acrylic butadiene styrene (ABS), polystyrene (PS), polypropylene (PP) or polyethylene (PE).

10. Tray according to one of claims 1 to 9, characterised in that the non-slip coatings (4, 6) of the underside (3) and/or the top (5) are transparent or translucent and at least one decorative element or decoration (15) is provided under these non-slip coatings (4, 6).

11. Tray according to claim 10, characterised in that the carrier film (7) itself wholly or partly forms the decorative element or decoration (15).

12. Tray according to claim 10 or 11, characterised in that at least one decorative element or decoration (15) is provided on the carrier film (7).

13. Tray according to one of claims 10 to 12, characterised in that the carrier film (7) is transparent or translucent and at least one decorative element or decoration (15) is provided between this carrier film (7) and the tray body (2).

14. Tray according to claim 13, characterised in that the at least one decorative element or decoration (15) is provided on the carrier film (7).

15. Tray according to one of claims 1 to 14, characterised in that the surface(s) (16, 17) of the non-slip coating(s) (4 or 6) is/are roughened or profiled.

16. Tray according to one of claims 1 to 15, characterised in that the non-slip coating (4) of the underside (3) and possibly the non-slip coating (6) of the top (5) take the form of individual and/or interconnecting dots and/or rings and/or discs and/or strips and/or triangular or polygonal patches.

## Revendications

1. Plateau (1), notamment plateau de service, dans lequel la face supérieure (5) du corps (2) du plateau est recouverte en totalité ou en partie d'une couche antidérapante (6),
caractérisé en ce que
la face inférieure (3) du corps (2) est également recouverte en totalité ou en partie d'une couche antidérapante (4), et entre les couches (4, 6) et le corps (2) se trouve une feuille support (7) fixée, en particulier collée, sur la face inférieure (3) et éventuellement aussi sur la face supérieure (5) du corps, ou bien formée sur le corps (2) au cours d'une opération de pressage, de moulage par transfert ou par injection.

2. Plateau selon la revendication 1,
caractérisé en ce que
la feuille support (7) prévue sur la face inférieure (3) et la couche antidérapante (4) placée sur celle-ci présentent vers le ou les points de coulée (2.1) chacune un évidement (10), et le corps (2) est moulé de manière que le ou les points de coulée (2.1) se trouve(nt) sur la face inférieure (3) du corps (2) du plateau.

3. Plateau selon la revendication 1 ou 2,
caractérisé en ce qu'
il est prévu entre les couches antidérapantes (4, 6) et le corps de plateau (2) des couches d'agent adhésif (13, 14).

4. Plateau selon une des revendications 1 à 3,
caractérisé en ce qu'
entre la feuille support (7) et le corps de plateau (2) se trouve une couche d'agent adhésif (13).

5. Plateau selon une des revendications 1 à 4,
caractérisé en ce qu'
entre la feuille support (7) et les couches antidérapantes (4, 6) se trouve une couche d'agent adhésif (14).

6. Plateau selon une des revendications 1 à 5,
caractérisé en ce que
les couches antidérapantes (4, 6) sont faites de ou à base de caoutchouc, d'élastomères thermoplastiques ou de matières thermoplastiques molles.

7. Plateau selon une des revendications 1 à 6,
caractérisé en ce que
la feuille support (7) est faite de ou à base d'au moins un des matériaux suivantes : acrylobutadiènestyrène (ABS), polystyrène (PS), polypropylène (PP) ou polyéthylène (PE).

8. Plateau selon une des revendications 1 à 7,
caractérisé en ce que
la couche d'agent adhésif (14), située entre les couches antidérapantes (4, 6) et la couche porteur (7) est faite de ou à base d'au moins un des matériaux suivants : polyuréthane réticulé (PUR) et/ou acrylate (AC).

9. Plateau selon une des revendications 1 à 8,
caractérisé en ce que
la couche d'agent adhésif (13) située entre la feuille support (7) et le corps (2) du plat est faite de ou à base d'au moins un des matériaux suivants : acrylobutadiènestyrène (ABS), polystyrène (PS), polypropylène (PP) ou polyéthylène (PE).

10. Plateau selon une des revendications 1 à 9,
caractérisé en ce que
les couches antidérapantes (4, 6) de la face inférieure (3) et/ou de la face supérieure (5) sont transparentes ou translucides et il est prévu sous ces couches antidérapantes (4, 6) au moins un élément décoratif ou un ensemble décoratif (15).

11. Plateau selon la revendication 10,
caractérisé en ce que
la feuille support (7) constitue elle-même, en tout ou en partie, l'élément ou l'ensemble décoratif (15).

12. Plateau selon une des revendications 10 ou 11,
caractérisé en ce qu'
il est prévu, sur la feuille support (7) au moins un élément ou un ensemble décoratif (15).

13. Plateau selon une des revendications 10 à 12,
caractérisé en ce que
la feuille support (7) est transparente ou translucide et, entre cette feuille support (7) et le corps (2) du plateau, il est prévu au moins un élément ou un ensemble décoratif (15).

14. Plateau selon la revendication 13,
caractérisé en ce qu'
au moins un élément ou un ensemble décoratif (15) est prévu sur la feuille support (7).

15. Plateau selon une des revendications 1 à 14,
caractérisé en ce que
la(les) face(s) supérieure(s) (16, 17) de la(des) couche(s) antidérapante(s) (4, 6) est(sont) rugueuse (s) ou profi1ée(s).

16. Plateau selon une des revendications 1 à 15,
caractérisé en ce que
la couche antidérapante (4) de la face inférieure (3) et éventuellement la couche antidérapante (6) de la face supérieure (5) présente(nt) la forme de points séparés et/ou raccordés et/ou d'anneaux et/ou de disques et/ou de bandes et/ou de surfaces triangulaires ou polygonales.
